# EUROPÄISCHE PATENTSCHRIFT

(11) **EP 0 996 306 B1**
(45) Veröffentlichungstag und Bekanntmachung des Hinweises auf die Patenterteilung: **08.09.2004**
(21) Anmeldenummer: 99120719.2
(22) Anmeldetag: 19.10.1999
(51) Int. Cl.: H04Q 7/38

(54) **Verfahren und Funk-Kommunikationssystem zur Signalisierungssteuerung**
Method and radio communication system for signalling control
Méthode et système de radiocommunication pour controler la signalisation

(30) Priorität: 19.10.1998 DE 19848116
(43) Veröffentlichungstag der Anmeldung: 26.04.2000
(73) Patentinhaber: SIEMENS AKTIENGESELLSCHAFT, 80333 München (DE)
(72) Erfinder: Schulz, Egon, Dr., 80993 München (DE)

(56) Entgegenhaltungen:
- US-A- 5 638 412
- US-A- 5 657 358

## Beschreibung

Die Erfindung betrifft ein Verfahren und ein Funk-Kommunikationssystem zur Signalisierungssteuerung, insbesondere in einem Mobilfunksystem.

In Funk-Kommunikationssystemen werden Nutzdaten, wie beispielsweise Sprache, Bildinformation oder andere Daten, mit Hilfe von elektromagnetischen Wellen über eine Funkschnittstelle zwischen einer sendenden und einer empfangenden Funkstation übertragen. Das Abstrahlen der elektromagnetischen Wellen erfolgt dabei mit Trägerfrequenzen, die in dem für das jeweilige System vorgesehenen Frequenzband liegen. Beim bekannten GSM-Mobilfunksystem (Global System for Mobile Communication), wie es unter anderem aus J. Biala, Mobilfunk und intelligente Netze", Vieweg Verlag, 1995, insbesondere den Seiten 57 bis 92, bekannt ist, liegen die Trägerfrequenzen im Bereich von 900 MHz, 1800 MHz und 1900 MHz. Für zukünftige Funkkommunikationssysteme, beispielsweise das UMTS (Universal Mobile Telecommunication System) oder andere Systeme der 3. Generation sind Frequenzen im Frequenzband von ca. 2000 MHz vorgesehen. Zur Unterscheidung unterschiedlicher Signalquellen am Ort des jeweiligen Empfängers sind Frequenzmultiplex-(FDMA), Zeitlagenmultiplex- (TDMA) und/oder als Kodemultiplexverfahren (CDMA) sowie Kombinationen dieser bekannten Verfahren einsetzbar.

In US 4,748,681 ist ein Funkkommunikationssystem beschrieben, bei dem eine Anzahl "mobile subscriber sets" von einer "radio station" funkversorgt werden. Dabei werden von der "radio station" angebotene "services" mit Hilfe einer "organizational message" an die Teilnehmer übertragen.

In WO 96/08938 ist ein Verfahren zur Auswahl eines Funkkanals beschrieben. Dabei werden von einer Basisstation zur Verfügung stehende Frequenzen in drei Bereiche unterteilt und den Teilnehmern mitgeteilt. Dabei werden Frequenzen eines ersten Bereichs bevorzugt für Funkübertragungen benutzt, die eines zweiten Bereichs werden nur begrenzt für Funkübertragungen benutzt, während Frequenzen eines dritten Bereichs nicht für Funkübertragungen benutzt werden, da diese beispielsweise Interferenzen verursachen könnten.

Auf der Seite 78 des genannten Standes der Technik von J. Biala eines GSM-Mobilfunksystems ist offenbart, daß eine Mobilstation bei einem Verbindungsaufbau einen gemeinsamen Zugangssignalisierungskanal RACH (Random Access Channel) für die Anforderung eines Übertragungskanals bei einer Basisstation verwendet. Um eine Blockierung bei einem gleichzeitigen Zugriff mehrerer Mobilstationen auf diesen Signalisierungskanal zu verhindern, erfolgt der Zugriff nach einem zeitlichen Zufallszugriffsverfahren, einem sogenannten Slotted-Aloha-Protokoll. Als Bestätigung auf die Verbindungsanfrage erfolgt von der Basisstation auf einem Bestätigungssignalisierungskanal AGCH (Access Grant Channel) eine direkte Zuweisung eines Übertragungskanals oder ein Verweis auf einen spezifischen Signalisierungskanal SDCCH (Stand-Alone Dedicated Channel) für die weitere standardgemäße Verbindungsaufbauprozedur.

Neben der Nutzung für einen Verbindungsaufbau wird der Zugangssignalisierungskanal RACH für weitere Dienste wie die Verbindungssteuerung (CM - Connection Management) und Mobilitätssteuerung (MM - Mobility Management) genutzt.

Der Dienst der Verbindungssteuerung führt unter anderem Funktionen wie beispielsweise Rufsteuerung, Zusatzdienstsignalisierung oder auch Kurznachrichtensignalisierung durch. Der Dienst der Mobilitätssteuerung umfaßt dahingegen alle Aufgaben, die sich aus der Mobilität der Mobilstationen ergeben. Er beinhaltet unter anderem die Lokalisierung und Positionsaktualisierung der Mobilstationen.

In zukünftigen Funk-Kommunikationssystemen der 3. Generation ist eine gemeinsame Nutzung beispielsweise des Zugangssignalisierungskanals für eine Vielzahl unterschiedlicher Dienste zur effektiveren Auslastung der Funkressourcen angedacht.

Der Erfindung liegt die Aufgabe zugrunde, ein Verfahren und ein Funk-Kommunikationssystem anzugeben, die eine Blockierung des Signalisierungskanals, der gemeinsam für mehrere Dienste genutzt wird, verhindert. Diese Aufgabe wird gemäß der Erfindung durch die Merkmale der unabhängigen Patentansprüche gelöst.

Vorteilhafte Ausgestaltungen der Erfindung sind den jeweiligen Unteransprüchen zu entnehmen.

Erfindungsgemäß werden beim Verfahren zur Signalisierungssteuerung in einem Funk-Kommunikationssystem von mehreren Funkstationen jeweils Signale eines Dienstes in einem gemeinsamen Signalisierungskanal in Aufwärtsrichtung zu einer Basisstation des Funk-Kommunikationssystems gesendet. Von der Basisstation werden dahingegen Signale in einem weiteren Signalisierungskanal in Abwärtsrichtung zu den Funkstationen gesendet. Kennzeichnend werden Diensteklassen den Diensten zugeordnet. Von der Basisstation werden abhängig von einem aktuell in dem gemeinsamen Signalisierungskanal ermittelten Verkehrsaufkommen mögliche Diensteklasse zur Weiterverarbeitung ausgewählt und den Funkstationen in dem weiteren Signalisierungskanal signalisiert. Von den Funkstationen werden daraufhin die ausgewählten Diensteklasse für einen Zugriff auf den gemeinsamen Signalisierungskanal berücksichtigt.

Die Erfindung besitzt den Vorteil, daß durch die Zuordnung der Dienste zu Diensteklassen in der Basisstation eine Auswahl getroffen werden kann, welche Dienste beispielsweise jederzeit den Funkstationen zur Verfügung stehen und welche Dienste beispielsweise bei einem hohen Verkehrsaufkommen in dem gemeinsamen Signalisierungskanal nicht weiterverarbeitet werden. Hierdurch wird vorteilhaft eine Überlastung bzw. eine Blockierung des gemeinsamen Signalisierungskanals aufgrund einer hohen Signalisierungslast verhindert.

Dieses wirkt sich besonders vorteilhaft aus, wenn gemäß Weiterbildungen Signale von eine Verbindungssteuerung, eine Mobilitätssteuerung und/oder eine Paketdatenübertragung betreffenden Diensten von den Funkstationen gesendet werden. Hierbei kann beispielsweise den Diensten der Verbindungs- und Mobilitätssteuerung, die in einem als ein Mobilfunksystem ausgestalteten Funk-Kommunikationssystem für eine gesicherte Verbindung und eine konstant hohe Übertragungsqualität von großer Bedeutung sind, gegenüber der Paketdatenübertragung eine Priorität eingeräumt werden, so daß bei einem hohen Verkehrsaufkommen die Diensteklassen der Verbindungs- und Mobilitätssteuerung ausgewählt und den Funkstationen signalisiert werden. In gleicher Weise ist eine Beschränkung des Dienstes der Verbindungssteuerung möglich, wenn beispielsweise alle Übertragungskanäle zugewiesen sind und keine weiteren Kommunikationsverbindungen über die Basisstation aufgebaut werden können. Die Berücksichtigung der jeweils ausgewählten Diensteklassen kann in den Funkstationen in der Weise erfolgen, daß die Funkstationen nur jeweils Signale der ausgewählten Dienste zu der Basisstation senden.

Einer weiteren Ausgestaltung der Erfindung zufolge werden die ausgewählten Diensteklassen jeweils durch ein Informationselement in einer Signalisierungsnachricht in dem weiteren Signalisierungskanal gekennzeichnet. Die erfindungsgemäße Signalisierungsnachricht ermöglicht vorteilhaft, daß die Funkstationen Signale von Diensten entsprechend den durch die gesetzten Informationselemente ausgewählten Diensteklassen senden können.

Gemäß einer weiteren Weiterbildung der Erfindung wird das aktuelle Verkehrsaufkommen periodisch in vorgegebenen Zeitintervallen und/oder bei einer Änderung des aktuellen Verkehrsaufkommens ermittelt. Dieses ermöglicht vorteilhaft, daß die Signalisierung der ausgewählten Dienste der jeweils aktuellen Änderung des Verkehrsaufkommens angepaßt werden kann, und somit den Funkstationen jederzeit bekannt ist, auf welche Dienste sie zugreifen können. Durch ein optimiertes Zeitintervall kann darüberhinaus die Signalisierungslast vorteilhaft minimiert werden, ohne daß negative Einbußen bezüglich der Kapazitätsauslastung des gemeinsamen Signalisierungskanals auftreten.

Gemäß zweier alternativer Weiterbildungen der Erfindung wird zum einen das aktuelle Verkehrsaufkommen der jeweiligen Diensteklassen mit einem Schwellenwert für ein maximales Verkehrsaufkommen verglichen, wobei bei einem Überschreiten des Schwellenwertes die jeweilige Diensteklasse nicht zur Weiterverarbeitung ausgewählt wird, und zum anderen das Verkehrsaufkommen in dem Signalisierungskanal mit zumindest einem Schwellenwert für ein maximales Verkehrsaufkommen verglichen wird, wobei bei einem jeweiligen Überschreiten des Schwellenwertes eine bestimmte Diensteklasse nicht zur Weiterverarbeitung ausgewählt wird.

Die erste alternative Weiterbildung ermöglicht vorteilhaft, daß durch den Vergleich jeder Diensteklasse mit einem Schwellenwert zu jeder Zeit eine entsprechende Übertragungskapazität für die entsprechenden Diensteklassen in dem gemeinsamen Signalisierungskanal zugesichert wird. Hierbei ist auch denkbar, daß beispielsweise nur das Verkehrsaufkommen für den Dienst der Paketdatenübertragung mit einem Schwellenwert verglichen wird. Wird dieser Schwellenwert überschritten, so wird den Funkstationen signalisiert, daß nur auf die weiterhin ausgewählten weiteren Dienste zugegriffen werden kann. Eine beispielhafte Einschränkung der Paketdatenübertragung ist aufgrund der nicht Echtzeit abhängigen Übertragung unkritisch, da das Senden eines Datenpakets durchaus solange von der Funkstation zurückgestellt werden kann, bis wieder ausreichend Übertragungskapazität in dem gemeinsamen Signalisierungskanal zur Verfügung steht.

Die zweite alternative Weiterbildung besitzt den Vorteil, daß nur das gesamte Verkehrsaufkommen in dem Signalisierungskanal ermittelt wird und abhängig davon jeweils die für einen optimalen Betrieb des Funk-Kommunikationssystems notwendigen Diensteklassen ausgewählt werden. So kann beispielsweise bei einem hohen Verkehrsaufkommen zuerst die Paketdatenübertragung und nachfolgend die Mobilitätssteuerung eingeschränkt werden, um zumindest einen gesicherten Verbindungsauf- und abbau sicherzustellen. Andererseits kann beispielsweise die Verbindungssteuerung eingeschränkt werden, wenn alle der Basisstation zur Verfügung stehenden Übertragungskanäle belegt sind. Die jeweiligen Schwellenwerte können dabei beispielsweise von dem Netzbetreiber eingestellt werden, da er großes Interesse an einer gleichbleibend hohen Übertragungsqualität und Verbindungssicherheit hat.

Als gemeinsamer Signalisierungskanal wird gemäß einer weiteren Weiterbildung ein Zugangssignalisierungskanal verwendet, auf den von den Funkstationen gemäß einem zufallsgesteuerten slotted-ALOHA-Verfahren zugegreifen. Dieser Zugangssignalisierungskanal kann beispielsweise auf dem aus dem GSM-Mobilfunksystem bekannten Zugangssignalisierungskanal basieren, dessen Funktion in der Beschreibungseinleitung beschrieben wurde.

Als weiterer Signalisierungskanal wird entsprechend einer weiteren Weiterbildung ein allgemeiner Signalisierungskanal verwendet, in dem allgemeine Systeminformationen des Funk-Kommunikationssystems gesendet werden, oder ein verbindungsindividueller Bestätigungssignalsierungskanal verwendet. Der allgemeine Signalisierungskanal wird von allen Funkstationen, die sich in dem Funkversorgungsbereich der Basisstation befinden, abgehört und dessen Systeminformationen ausgelesen und ausgewertet. Der verbindungsindividuelle Bestätigungssignalisierungskanal besitzt den Vorteil, daß nur jeweils den auf den gemeinsamen Signalisierungskanal zugreifenden Funkstationen die ausgewählten Diensteklassen signalisiert werden, wodurch vorteilhaft die allgemeine Signalisierungslast in dem Funk-Kommunikationssystem verringert wird.

Der weitere Signalisierungskanal kann auf dem aus dem GSM-Mobilfunksystem bekannten Broadcast Control Channel (BCCH) bzw. auf dem Access Grant Channel (AGCH), wie sie in der Beschreibungseinleitung beschrieben wurden, basieren, die jeweils um zusätzliche Signalisierungsinformationen ergänzt werden. Diese Ausgestaltung der Signalisierungskanäle basierend auf bekannten Signalisierungskanälen besitzt den Vorteil, daß eine Kompatibiltät mit zwischen beispielsweise Mobilfunksystemen der zweiten und dritten Generation ermöglicht wird, wobei die zusätzlichen Informationen beispielsweise von dem älteren System nicht erkannt bzw. berücksichtigt wird.

Besonders vorteilhaft wird das erfindungsgemäße Verfahren in einem Funk-Kommunikationssystem eingesetzt, das ein CDMA-Teilnehmerseparierungsverfahren bzw. eine Kombinationen eines CDMA-Verfahrens mit weiteren Teilnehmerseparierungsverfahren nutzt. Diesen Verfahren gemeinsam ist eine parallele Nutzung eines Frequenzbandes für mehrere Kommunikationsverbindungen, wobei die einzelnen Verbindungen durch individuelle Spreizkodes unterschieden werden. Hierdurch kann im Vergleich zu dem bekannten GSM-Mobilfunksystem eine größere Anzahl Funkstationen parallel auf den gemeinsamen Signalisierungskanal zugreifen und entsprechend eine Überlastung dieses Kanals bewirken.

Ausführungsbeispiele der Erfindung werden anhand der beiliegenden Zeichnungen näher erläutert.

Dabei zeigen
- FIG 1: ein Blockschaltbild eines Funk-Kommunikationssystems, insbesondere eines Mobilfunksystems,
- FIG 2: eine schematische Darstellung der Rahmenstruktur der Funkschnittstelle und des Aufbaus eines Funkblocks,
- FIG 3: ein Blockschaltbild eines Basisstationssystems mit erfindungsgemäßen Einrichtungen, und
- FIG 4: ein Signalisierungsdiagramm des erfindungsgemäßen Verfahrens.

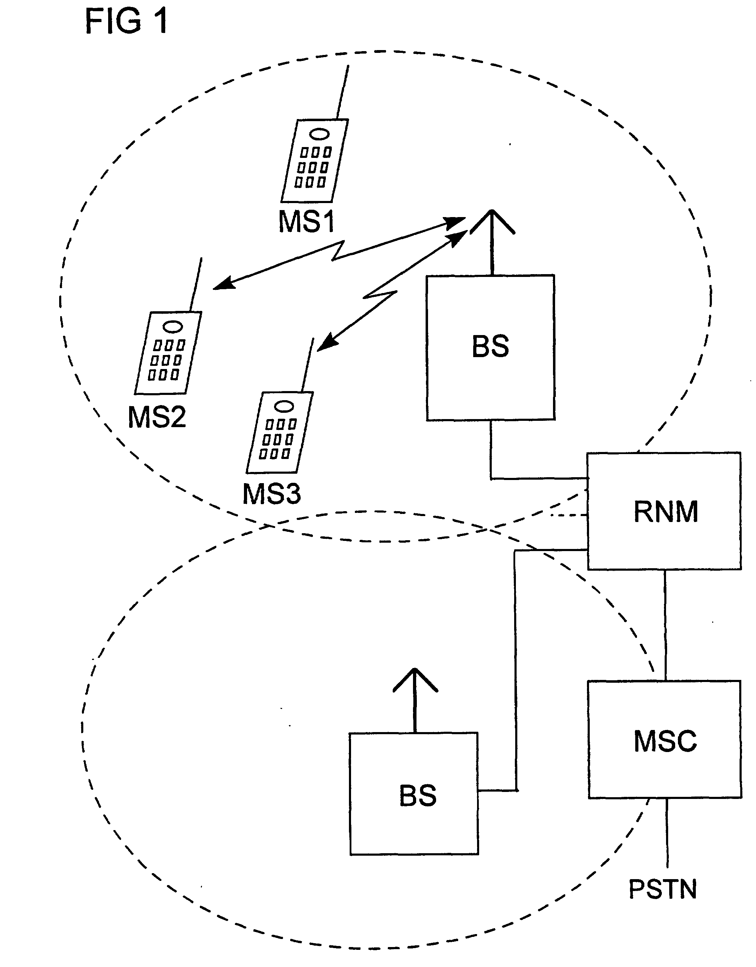

Das in FIG 1 dargestellte und beispielhaft als ein Mobilfunksystem ausgestaltete Funk-Kommunikationssystem entspricht in seiner Struktur einem bekannten GSM-Mobilfunksystem, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einer Einrichtung zur Zuweisung funktechnischer Ressourcen RNM verbunden. Jede dieser Einrichtungen RNM ermöglicht wiederum eine Verbindung zu zumindest einer Basisstation BS. Diese Basisstation BS ist eine Funkstation, die über eine Funkschnittstelle Kommunikationsverbindungen zu Funkstationen MS1..., die als Mobilstationen ausgestaltet sein können, aufbauen und auslösen kann. Die Funktionalität dieser Struktur wird von dem erfindungsgemäßen Verfahren genutzt.

In FIG 1 sind beispielhaft zwei Kommunikationsverbindungen zur Übertragung von Nutzdaten und Signalisierungsinformationen zwischen Funkstationen MS2, MS3 und einer Basisstation BS dargestellt. Weiterhin befindet sich eine weitere Funkstation MS1 in dem Funkversorgungsbereich der Basisstation BS, die in dem dargestellten Fall noch keine Kommunikationsverbindung aufgebaut hat.

Die Basisstation BS weist zur Ausleuchtung eines Funkversorgungsgebietes zumindest eine Antenneneinrichtung auf, die beispielsweise aus drei Einzelstrahlern besteht. Jeder der Einzelstrahler strahlt gerichtet in einen Sektor des versorgten Funkversorgungsgebietes. Es können jedoch alternativ auch eine größere Anzahl von Einzelstahlern (gemäß adaptiver Antennen) eingesetzt werden, so daß auch eine räumliche Teilnehmerseparierung nach einem SDMA-Verfahren (Space Division Multiple Access) ermöglicht wird.

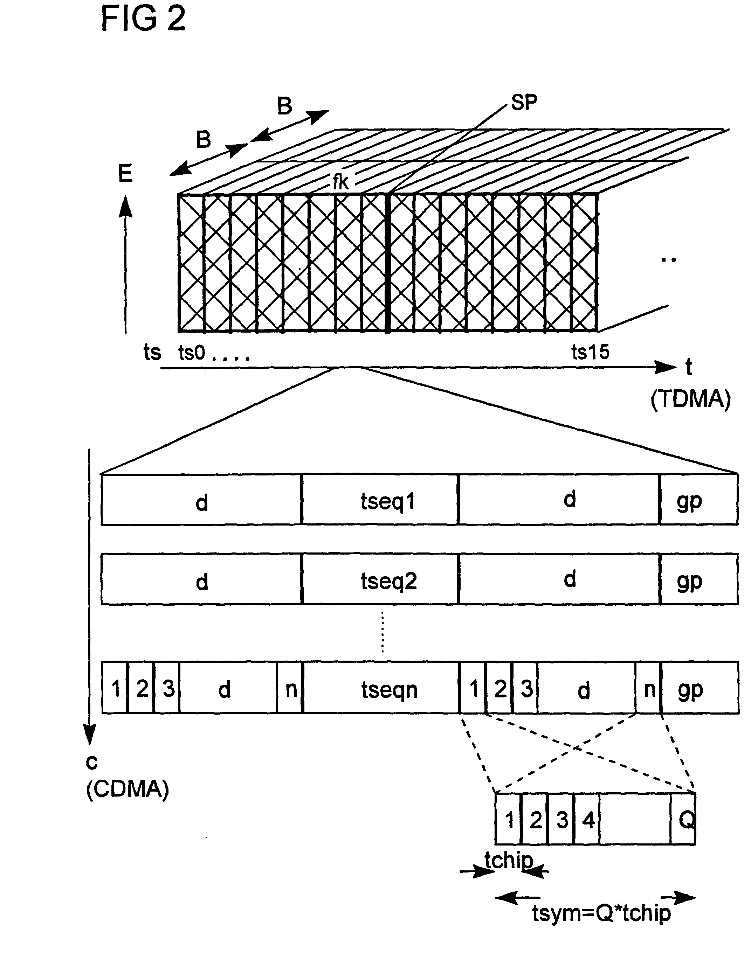

Eine beispielhafte Rahmenstruktur der Funkschnittstelle ist aus der FIG 2 ersichtlich. Gemäß einer TDMA-Komponente ist eine Aufteilung eines breitbandigen Frequenzbandes, beispielsweise der Bandbreite B = 5 MHz, in mehrere Zeitschlitze ts, beispielsweise 16 Zeitschlitze ts0 bis ts15 vorgesehen. Jeder Zeitschlitz ts innerhalb des Frequenzbandes B bildet einen Frequenzkanal fk. Innerhalb eines breitbandigen Frequenzbandes B werden die aufeinanderfolgenden Zeitschlitze ts nach einer Rahmenstruktur gegliedert. So werden 16 Zeitschlitze ts0 bis ts15 zu einem Rahmen zusammengefaßt.

Bei einer Nutzung eines TDD-Übertragungsverfahrens wird ein Teil der Zeitschlitze ts1 bis ts15 in Aufwärtsrichtung und ein Teil der Zeitschlitze ts0 bis ts15 in Abwärtsrichtung benutzt, wobei die Übertragung in Aufwärtsrichtung beispielsweise vor der Übertragung in Abwärtsrichtung erfolgt. Dazwischen liegt ein Umschaltzeitpunkt SP, der entsprechend dem jeweiligen Bedarf an Übertragungskanälen für die Auf- und Abwärtsrichtung flexibel positioniert werden kann. Ein Frequenzkanal fk für die Aufwärtsrichtung entspricht in diesem Fall dem Frequenzkanal fk für die Abwärtsrichtung. In gleicher Weise sind die weiteren Frequenzkanäle fk strukturiert.

Innerhalb der Frequenzkanäle fk werden Informationen mehrerer Verbindungen in Funkblöcken übertragen. Diese Funkblöcke bestehen aus Abschnitten mit Daten d, in denen jeweils Abschnitte mit empfangsseitig bekannten Trainingssequenzen tseq1 bis tseqn eingebettet sind. Die Daten d sind verbindungsindividuell mit einer Feinstruktur, einem Spreizkode c (CDMA-Kode), gespreizt, so daß empfangsseitig beispielsweise n Verbindungen durch diese CDMA-Komponente separierbar sind. Die Kombination aus einem Frequenzkanal fk und einem Spreizkode c definiert einen Übertragungskanal, der für die Übertragung von Signalisierungs- und Nutzinformationen genutzt wird.

Die Spreizung von einzelnen Symbolen der Daten d mit Q Chips bewirkt, daß innerhalb der Symboldauer tsym Q Subabschnitte der Dauer tchip übertragen werden. Die Q Chips bilden dabei den individuellen CDMA-Kode c. Weiterhin ist innerhalb des Zeitschlitzes ts eine Schutzzeit gp zur Kompensation unterschiedlicher Signalaufzeiten der Verbindungen aufeinanderfolgender Zeitschlitze ts vorgesehen.

Eine Anwendung des erfindungsgemäßen Verfahrens ist beispielsweise auch für ein aus dem GSM-Mobilfunksystem bekanntes TDMA- oder für ein CDMA-Teilnehmerseparierungsverfahren möglich, wobei bei dem CDMA-Verfahren ein Übertragungskanal lediglich durch ein Frequenzband B und einen CDMA-Kode definiert wird, und eine kontinuierliche Übertragung von Nutzund Signalisierungsinformationen in den Übertragungskanälen erfolgt.

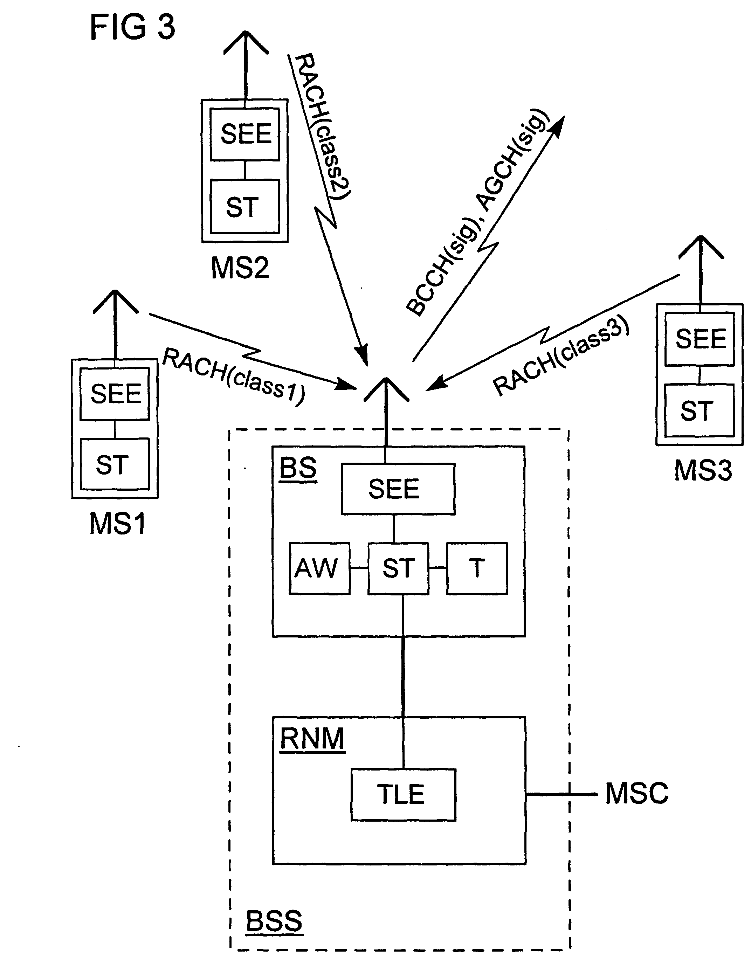

Das in der FIG 3 dargestellte Blockschaltbild basiert auf dem Mobilfunksystem der FIG 1. Beispielhaft besteht eine Signalübertragung zwischen einer Basisstation BS eines Basisstationssystems BSS, welches neben der Basisstation BS eine Einrichtung RNM zur Zuweisung funktechnischer Ressourcen aufweist, und drei Funkstationen MS1, MS2 und MS3, die sich in dem Funkversorgungsbereich der Basisstation BS befinden. Die Funkstationen MS2 und MS3 unterhalten entsprechend der FIG 1 bereits Kommunikationsverbindungen über die Basisstation BS, währenddessen die weitere Funkstation MS1 noch keine Kommunikationsverbindung aufgebaut hat. Dargestellt ist in der FIG 3 nur eine Übertragung von Signalen in Signalisierungskanälen, so wird beispielsweise von der Basisstation BS periodisch ein allgemeiner Signalisierungskanal BCCH in Abwärtsrichtung gesendet, der allgemeine Systeminformationen über das Mobilfunksystem enthält und der parallel von allen Basisstationen BS gesendet wird. Die Funkstationen MS1, MS2 und MS3 senden dahingegen beispielsweise Signale auf einem Zugangssignalisierungskanal RACH zu der Basisstation BS, wobei die Signale unterschiedlichen Diensteklassen class1, class2 und class3 zugewiesen sind. Der Zugangssignalisierungskanal RACH kann dabei in seiner Grundstruktur dem aus dem GSM-Mobilfunksystem bekannten Random Access Channel RACH entsprechen, den die Funkstationen MS1, MS2 und MS3 für einen wahlfreien Vielfachzugriff nach dem Prinzip des Slotted-Aloha-Verfahrens nutzen. Bei der Nutzung einer Funkschnittstellenstruktur, wie sie in der FIG 2 dargestellt ist, kann eine Unterscheidung mehrerer auf den Zugangssignalisierungskanal RACH zugreifender Funkstationen beispielsweise durch eine wahlfreie Nutzung von acht orthogonalen Kodes erfolgen.

Die beispielhaft in dem Zugangssignalisierungskanal RACH übertragenen Signale der Dienste sind Diensteklassen class1, class2 und class3 derart zugeordnet, daß die Diensteklasse class1 beispielsweise den Dienst einer Verbindungssteuerung, wie beispielsweise Verbindungsauf- und abbau, die Diensteklasse class2 den Dienst einer Mobilitätssteuerung, wie beispielsweise Lokalisierung und Positionsaktualisierung der Funkstation, und die Diensteklasse class3 den Dienst einer Paketdatenübertragung, entsprechen. Als jeweilige Bestätigung einer Signalisierung durch eine Funkstation kann von der Basisstation beispielsweise entsprechend dem GSM-Mobilfunksystem auf einem Bestätigungssignalisierungskanal AGCH (Access Grant Channel) eine direkte Zuweisung eines Übertragungskanals oder ein Verweis auf einen spezifischen Signalisierungskanal SDCCH (Stand-Alone Dedicated Channel) für die weitere standardgemäße Verbindungsaufbauprozedur erfolgen. Die Verbindungssteuerungs- und Mobilitätssteuerungs-Funktionen werden beispielsweise entsprechend dem GSM-Mobilfunksystem ausschließlich zwischen den Mobilstationen und den Mobilvermittlungsstellen in logischen Kanälen der Schicht 3 der standardisierten Signalisierungsprotokollarchitektur abgewickelt.

Die Mobilitätssteuerung, die Verbindungssteuerung sowie eine Funkressourcensteuerung sind entsprechend untergeordnete Schichten der Schicht 3. Die Verbindungssteuerung ist weiter untergliedert in die drei Protokollinstanzen Rufsteuerung (CC Call Control), Zusatzdienstsignalisierung (Supplementary Services SS) und Kurznachrichtensignalisierung (Short Message Services SMS). Die Funkressourcensteuerung übernimmt die Aufgabe der Frequenz- und Kanalverwaltung zum Auf- bzw. Abbauen und Aufrechterhalten von Kommunikationsverbindungen zwischen einer Mobilstation und dem Mobilfunknetz. Darüber hinaus ist die Funkressourcensteuerung unter anderem auch für das Abhören des Broadcast Control Channels (BCCH) verantwortlich, wenn keine Kommunikationsverbindung etabliert ist. Die Mobilitätssteuerung umfaßt alle Aufgaben, die sich aus der Mobilität der Mobilstation ergeben. Sie beinhalten unter anderem die Lokalisierung und Positionsaktualisierung der Mobilstation. In der Verbindungssteuerung übernimmt die Rufsteuerung alle Aufgaben im Rahmen von Aufbau, Betrieb und Abbau von Rufen.

Ein Verbindungsaufbauversuch der weiteren Funkstation MS1 durch eine Signalisierung gemäß der Diensteklasse class1 geschieht beispielsweise in der vom GSM-Mobilfunksystem bekannten Weise, daß die weitere Funkstation MS1 den allgemeinen Signalisierungskanal BCCH abhört und einen Verbindungsaufbau zu der Basisstation BS, dessen allgemeinen Signalisierungskanal BCCH sie mit der größten Empfangsstärke empfängt, initiiert. Dieses ist in der Regel die Basisstation BS, in dessen Funkversorgungsbereich sich die weitere Funkstation MS1 aktuell befindet. Der allgemeine Signalisierungskanal BCCH kann gemäß der in der FIG 2 dargestellten Struktur der Funkschnittstelle beispielsweise in dem ersten Zeitschlitz ts0 von den Basisstationen BS gesendet werden, wobei eine Unterscheidbarkeit der verschiedenen Basisstationen BS durch eine unterschiedliche Trainingssequenz tseq sichergestellt ist.

Die in der FIG 3 dargestellte Situation entspricht einem Zugriff der Funkstationen MS1, MS2 und MS3 auf den Zugangssignalisierungskanal RACH, wobei jeweils Signale gemäß unterschiedlicher Diensteklassen class1, class2 bzw. class3 gesendet werden. Die Funkstation MS3 sendet Nutzdateninformationen in Form von Datenpaketen gemäß der Diensteklasse class3, die Funkstation MS2 signalisiert beispielsweise eine Pösitionsaktualisierung gemäß der Diensteklasse class2 und die weitere Funkstation MS1 fordert beispielhaft einen Verbindungsaufbau gemäß der Diensteklasse class1 an.

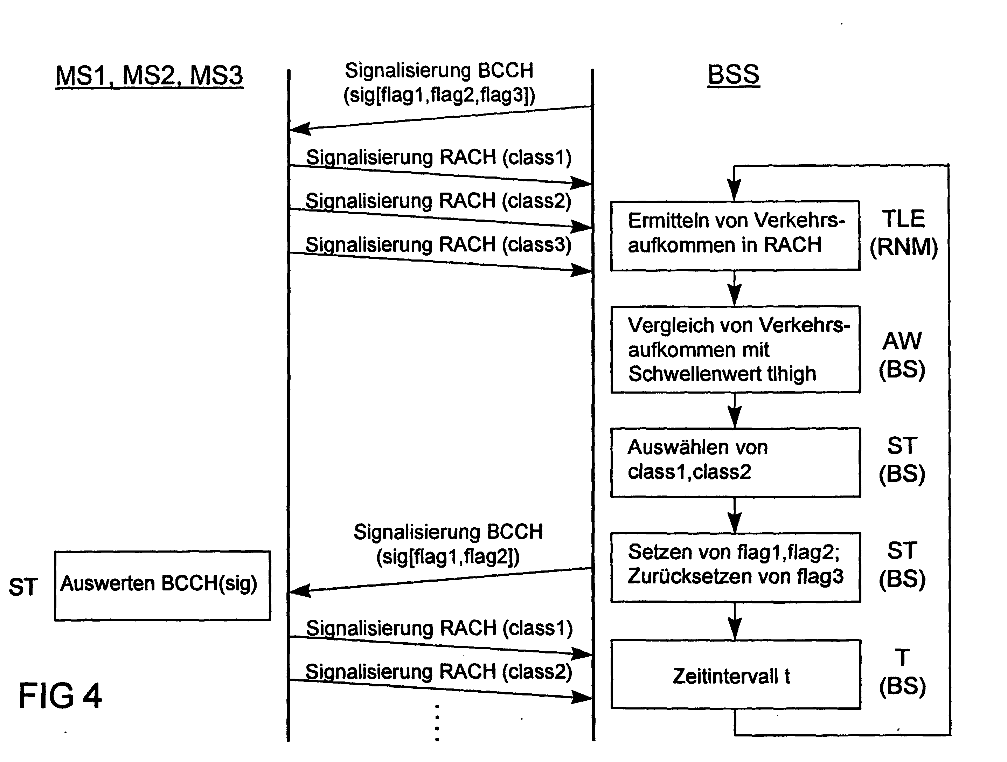

Für das Senden und Empfangen von Nutz- und Signalisierungeinformationen in Übertragungskanälen und Signalisierungskanälen weisen die Basisstation BS und die Funkstationen MS1, MS2, MS3 jeweils eine Sende- und Empfangseinrichtung SEE auf. Die Basisstation BS und die Einrichtung RNM zur Zuweisung funktechnischer Ressourcen weisen ferner eine erfindungsgemäße Auswerteeinrichtung AW, eine Steuereinrichtung ST und einen Timer T bzw. eine Einrichtung TLE zur Ermittlung des Verkehrsaufkommens auf. Die Funkstationen MS1, MS2, MS3 weisen zusätzlich zu der Sende-/Empfangseinrichtung SEE eine Steuereinrichtung ST auf. Neben diesen dargestellten erfindungsrelevanten und in der folgenden Beschreibung zu der FIG 4 beschriebenen Einrichtungen sind in den Komponenten des Basisstationssystem BSS und in den Funkstationen MS1, MS2, MS3 weitere bekannte Einrichtungen verwirklicht.

In der FIG 4 ist ein Signalsierungsdiagramm für eine beispielhafte Ausführung des erfindungsgemäßen Verfahrens dargestellt. Auf der linken Seite sind dabei Verfahrensschritte für die Funkstationen MS1, MS2, MS3 und auf der rechten Seite Verfahrensschritte für das Basisstationssystem BSS angegeben. Seitlich der Verfahrensschritte ist die Einrichtung und in Klammern die Komponente, in der der jeweilige Verfahrensschritt ausgeführt wird, angegeben. In der Mitte ist die Signalisierung über die Funkschnittstelle zwischen den Funkstationen MS1, MS2, MS3 und dem Basisstationssystem BSS dargestellt.

Bezogen auf die dargestellte Situation der FIG 3 werden von der Basisstation BS allgemeine Systeminformationen über das Funk-Kommunikationssystem in dem allgemeinen Signalisierungskanal BCCH gesendet. Die Systeminformationen enthalten eine zusätzliche erfindungsgemäße Signalisierungsnachricht sig, in der den empfangenden Funkstationen MS1, MS2 und MS3 signalisiert wird, daß die Diensteklassen class1, class2 und class3 aktuell auf dem Zugangssignalisierungskanal RACH netzseitig weiterverarbeitet werden können. Die Auswahl der unterstützten Diensteklassen class1, class2 und class3 kann beispielsweise durch ein jeweiliges Informationselement flag1, flag2 bzw. flag3 erfolgen. Die Informationselemente flag1, flag2, flag3 können beispielsweise aus jeweils einem Oktett bestehen. Abhängig von dem oder den aktuell ausgewählten Diensteklassen class1, class2, class3 werden die jeweiligen Informationselemente flag1, flag2 und flag3 in der Signalisierungsnachricht sig eingetragen.

Von den Funkstationen MS1, MS2 und MS3 werden daraufhin entsprechend der Beschreibung zu der FIG 3 in dem Zugangssignalisierungskanal RACH Signale gemäß unterschiedlicher Diensteklassen class1, class2 bzw. class3 zu der Basisstation BS gesendet. Die Signale werden in der Sende-/Empfangseinrichtung SEE in der Basisstation BS empfangen und der netzseitigen Weiterverarbeitung zugeführt. In der Einrichtung TLE zur Ermittlung des Verkehrsaufkommens in der Einrichtung RNM zur Zuweisung funktechnischer Ressourcen wird das aktuelle Verkehrsaufkommen in dem Zugangssignalisierungskanal RACH ermittelt und der Steuereinrichtung ST in der Basisstation BS signalisiert. Die Ermittlung wird beispielsweise von einem Timer T in vorgegebenen Zeitintervallen t oder bei einer Änderung des Verkehrsaufkommens angeregt. Der Timer T ist dabei wie in der FIG 3 angegeben in der Basisstation BS verwirklicht, eine zentralere Anordnung des Timers T beispielsweise in der Einrichtung RNM ist jedoch ebenso denkbar. Das Zeitintervall t kann beispielsweise von dem Betreiber des Funk-Kommunikationssystems in einem zentralen Operations- und Wartungszentrum variiert werden. Denkbar ist auch eine beispielhafte Realsierung der Einrichtung TLE zur Ermittlung des Verkehrsaufkommens in der Basisstation BS.

Das ermittelte Verkehrsaufkommen wird in einer mit der Steuereinrichtung ST verbundenen Auswerteeinrichtung AW mit zumindest einem Schwellenwert tlhigh verglichen. Dieser Vergleich kann in unterschiedlicher Weise erfolgen. So ist zum einen ein Vergleich jeweils eines durch eine Diensteklasse class1, class2 bzw. class3 verursachten Verkehrsaufkommens mit einem jeweiligen Schwellenwert tlhigh möglich, wobei von der Einrichtung TLE zur Ermittlung des Verkehrsaufkommens für jede Diensteklasse class1, class2 bzw. class3 ein jeweiliges Verkehrsaufkommen ermittelt wird. Andererseits ist ein Vergleich des ermittelten gesamten Verkehrsaufkommens mit mehreren Schwellenwerten tlhigh denkbar, wobei bei einem jeweiligen Überschreiten eines Schwellenwertes tlhigh ein Informationselement der jeweiligen Diensteklasse class1, class2 bzw. class3 aus der Signalisierungsnachricht sig entfernt wird. In gleicher Weise kann beispielsweise auch nur das Verkehrsaufkommen der Diensteklasse class3, also der Paketdatenübertragung, mit einem Schwellenwert tlhigh verglichen wird. Als Ergebnis des jeweiligen Vergleichs werden in der Steuereinrichtung ST entsprechende Diensteklassen, in dem Beispiel der FIG 4 die Diensteklassen class1 und class2 ausgewählt und die entsprechenden Informationselemente flag1 und flag2 in der Signalisierungsnachricht sig belassen bzw. das Informationselement flag3 für die Diensteklasse class3 aus der Signalisierungsnachricht sig entfernt.

Auf dem allgemeinen Signalisierungskanal BCCH wird daraufhin den Funkstationen MS1, MS2 und MS3 durch die eingetragenen Informationselemente flag1, flag2 in der Signalisierungsnachricht sig signalisiert, daß aktuell nur die Diensteklassen class1 und class2 netzseitig weiterverarbeitet werden. In den Steuereinrichtungen ST der Funkstationen MS1, MS2 und MS3 wird daraufhin der Inhalt des allgemeinen Signalisierungskanals BCCH ausgewertet und eine entsprechende Anpassung bezüglich des Sendens von Signalen in dem Zugangssignalisierungskanal RACH durchgeführt.

In dem in der FIG 3 und FIG 4 dargestellten Beispiel bedeutet die Signalisierung in dem allgemeinen Signalisierungskanal BCCH, daß die Funkstation MS2 weiterhin eine Lokalisierungsaktualisierung und die weitere Funkstation MS1 einen Verbindungsaufbau signalisieren kann. Die Funkstation MS3 kann dahingegen aufgrund des nicht mehr gesendeten Informationselements flag3 solange keine weiteren Datenpakete gemäß der Diensteklasse class3 zu der Basisstation BS senden, bis das Informationselement flag3 wieder in die Signalisierungsnachricht sig eingefügt wird.

In gleicher Weise kann bei einem weiteren Anstieg des Verkehrsaufkommens auch das Informationselement flag2 für die Diensteklasse class2 entfernt werden. Die Entscheidung, welche Diensteklasse in welcher Situation jeweils übertragen wird, kann beispielsweise von dem Netzbetreiber durch eine Einstellung der jeweiligen Schwellenwerte tlhigh definiert werden, wobei jedoch vorangig die für das Funktionieren eines Mobilfunksystems vitalen Dienste wie Verbindungs- und Mobilitätssteuerung einen Vorrang gegenüber der Übertragung von Datenpaketen haben sollten. Dieses kann beispielsweise in Sonderfällen wie beispielsweise bei örtlich begrenzten Veranstaltungen, die nur von einer Basisstation BS versorgt werden und bei denen daher praktisch keine Signalisierung für eine Mobilitätssteuerung auftritt, auch zugunsten beispielsweise einer erhöhten benutzbaren Übertragungskapazität für Paketdatenübertragung adaptiv angepaßt werden. Ein Sonderfall ist beispielsweise auch die vollständige Belegung aller Übertragungskanäle der Basisstation BS. In diesem Fall kann die Verbindungssteuerung zugunsten der Paketdatenübertragung gesperrt werden, da keine neuen Verbindungen aufgebaut werden können.

Die Signalisierung der jeweils ausgewählten Diensteklassen class1, class2, class3 durch die Basisstation BS kann in einer Abwandlung der Erfindung auch in einem Punkt-zu-Punkt-Signalisierungskanal wie dem erwähnten Bestätigungssignalisierungskanal AGCH im Vergleich zu dem in dem Beispiel angegebenen Punkt-zu-Multipunkt-Signalisierungskanal BCCH erfolgen. Hierbei kann den jeweiligen Funkstationen MS1, MS2 und MS3 eine Sendeerlaubnis für die Diensteklassen class1, class2, class3 durch Senden der entsprechenden Informationselemente zugeteilt werden, bzw. ein Senden durch Entfernen von Informationselementen untersagt werden.

## Patentansprüche

1. Verfahren zur Signalisierungssteuerung in einem Funk-Kommunikationssystem, bei dem
- von mehreren Funkstationen (MS1...) jeweils Signale eines Dienstes in einem gemeinsamen Signalisierungskanal (RACH) in Aufwärtsrichtung zu einer Basisstation (BS) des Funk-Kommunikationssystems gesendet werden, und
- von der Basisstation (BS) Signale in einem weiteren Signalisierungskanal (BCCH, AGCH) in Abwärtsrichtung zu den Funkstationen (MS1...) gesendet werden,
- bei dem Diensteklassen (classl...) den Diensten zugeordnet werden,
**dadurch gekennzeichnet,**
- **dass** von der Basisstation (BS) abhängig von einem aktuell in dem gemeinsamen Signalisierungskanal (RACH) ermittelten Verkehrsaufkommen mögliche Diensteklassen (class1...) zur Weiterverarbeitung ausgewählt werden,
- **dass** von der Basisstation (BS) die ausgewählten möglichen Diensteklassen (class1...) den Funkstationen (MS1...) in dem weiteren Signalisierungskanal (BCCH, AGCH) signalisiert werden, und
- **dass** nur diejenigen Funkstationen (MS1...), deren Dienste einer möglichen Diensteklasse (class1...) zuordenbar sind, auf den gemeinsamen Signalisierungskanal (RAUCH) zugreifen.

2. Verfahren nach Anspruch 1, **dadurch gekennzeichnet, dass** eine Diensteklasse (class1) einem eine Verbindungssteuerung betreffenden Dienst zugeordnet wird.

3. Verfahren nach einem vorhergehenden Anspruch, **dadurch gekennzeichnet, dass** eine Diensteklasse (class2) einem eine Mobilitätssteuerung betreffenden Dienst zugeordnet wird.

4. Verfahren nach einem vorhergehenden Anspruch, **dadurch gekennzeichnet, daß** eine Diensteklasse (class3) einem eine Paketdatenübertragung betreffenden Dienst zugeordnet wird.

5. Verfahren nach einem vorhergehenden Anspruch, **dadurch gekennzeichnet, dass** die ausgewählten Diensteklassen (class1...) jeweils durch ein Informationselement (flag1...) in einer Signalisierungsnachricht (sig) in dem weiteren Signalisierungskanal (BCCH, AGCH) gekennzeichnet werden.

6. Verfahren nach einem vorhergehenden Anspruch, **dadurch gekennzeichnet, dass** das aktuelle Verkehrsaufkommen in dem gemeinsamen Signalisierungskanal (RACH) in der Basisstation (BS) oder in einer Einrichtung (RNM) zur Zuweisung funktechnischer Ressourcen des Funk-Kommunikationssystems ermittelt wird.

7. Verfahren nach einem vorhergehenden Anspruch, **dadurch gekennzeichnet, dass** das aktuelle Verkehrsaufkommen in dem gemeinsamen Signalisierungskanal (RACH) periodisch in vorgegebenen Zeitintervallen (t) und/oder bei einer Änderung des Verkehrsaufkommens ermittelt wird.

8. Verfahren nach einem vorhergehenden Anspruch, **dadurch gekennzeichnet, dass** das aktuelle Verkehrsaufkommen der jeweiligen Diensteklassen (class1...) mit einem Schwellenwert (tlhigh) für ein maximales Verkehrsaufkommen verglichen wird, wobei bei einem Überschreiten des Schwellenwertes (tlhigh) die jeweilige Diensteklasse (class1...) nicht zur Weiterverarbeitung ausgewählt wird.

9. Verfahren nach einem der Ansprüche 1 bis 7, **dadurch gekennzeichnet, dass** das aktuelle Verkehrsaufkommen in dem gemeinsamen Signalisierungskanal (RACH) mit zumindest einem Schwellenwert (tlhigh) für ein maximales Verkehrsaufkommen verglichen wird, wobei bei einem jeweiligen Überschreiten des Schwellenwertes (tlhigh) eine bestimmte Diensteklasse (class1...) nicht zur Weiterverarbeitung ausgewählt wird.

10. Verfahren nach einem vorhergehenden Anspruch, **dadurch gekennzeichnet, dass** als gemeinsamer Signalisierungskanal (RACH)ein Zugangssignalisierungskanal verwendet wird, auf den von den Funkstationen (MS1...) gemäß einem zufallsgesteuerten slotted-ALOHA-Verfahren zugegriffen wird.

11. Verfahren nach einem vorhergehenden Anspruch, **dadurch gekennzeichnet, dass** als weiterer Signalisierungskanal (BCCH, AGCH) ein allgemeiner Signalisierungskanal, in dem allgemeine Systeminformationen des Funk-Kommunikationssystems gesendet werden, oder ein verbindungsindividueller Bestätigungssignalisierungskanal verwendet wird.

12. Verfahren nach einem vorhergehenden Anspruch, **dadurch gekennzeichnet, dass** eine Teilnehmerseparierung gemäß einem CDMA-Verfahren für eine Signalübertragung über eine Funkschnittstelle des Funk-Kommunikationssystems durchgeführt wird, wobei ein physikalischer Übertragungskanal für den gemeinsamen Signalisierungskanal (RACH) und für den weiteren Signalisierungskanal (BCCH, AGCH) durch ein Frequenzband (B) und einen Spreizkode (c) definiert wird.

13. Verfahren nach einem vorhergehenden Anspruch, **dadurch gekennzeichnet, dass** eine Teilnehmerseparierung gemäß einem TDMA-Verfahren durchgeführt wird, wobei ein physikalischer Übertragungskanal für den gemeinsamen Signalisierungskanal (RACH) und für den weiteren Signalisierungskanal (BCCH, AGCH) durch ein Frequenzband (B) und einen Zeitschlitz (ts) definiert wird.

14. Verfahren nach einem vorhergehenden Anspruch, **dadurch gekennzeichnet, dass** die Signalübertragung gemäß einem TDD-Verfahren durchgeführt wird, wobei die Signale in Aufwärtsrichtung von den Funkstationen (MS1...) zu der Basisstation (BS) und in Abwärtsrichtung von der Basisstation (BS) zu den Funkstationen (MS1...) zeitlich getrennt in einem Frequenzband (B) übertragen werden.

15. Funk-Kommunikationssystem zur Durchführung des Verfahrens nach einem der Ansprüche 1 bis 14, mit mehreren Funkstationen (MS1...), die jeweils eine Sende/Empfangseinrichtung (SEE) zum Senden von jeweiligen Signalen eines Dienstes in einem gemeinsamen Signalisierungskanal (RACH) in Aufwärtsrichtung zu einer Basisstation (BS) aufweisen, und die Basisstation (BS) eine Sende-/Empfangseinrichtung (SEE) zum Senden von Signalen in einem weiteren Signalisierungskanal (BCCH, AGCH) in Abwärtsrichtung zu den Funkstationen (MS1...) aufweist,
**gekennzeichnet durch**
- eine Steuereinrichtung (ST) in der Basisstation (BS) zum Auswählen von den Diensten zugeordneten möglichen Diensteklassen (class1...) zur Weiterverarbeitung in Abhängigkeit von einem aktuell in dem gemeinsamen Signalisierungskanal (RACH) ermittelten Verkehrsaufkommen, und zum Bereitstellen der Auswahl für die Sende/Empfangseinrichtung (SEE) zum Signalisieren der ausgewählten möglichen Diensteklassen (class1...) in dem weiteren Signalisierungskanal (BCCH, AGCH), und
- eine in den Funkstationen (MS1...) jeweils vorgesehene Steuereinrichtung (ST), die derart steuerbar ist, dass nur diejenigen Funkstationen (MS1...), deren Dienste einer möglichen Diensteklasse zuordenbar sind, auf den gemeinsamen Signalisierungskanal (RACH) zugreifen.

16. Funk-Kommunikationssystem nach Anspruch 15, **gekennzeichnet durch** eine Einrichtung (TLE) in der Basisstation (BS) zum Ermitteln des aktuellen Verkehrsaufkommens in dem gemeinsamen Signalisierungskanal (RACH) oder des jeweiligen aktuellen Verkehrsaufkommens der Diensteklassen (class1...).

17. Funk-Kommunikationssystem nach Anspruch 15, **gekennzeichnet durch** eine mit der Basisstation (BS) verbundene Einrichtung (RNM) zur Zuweisung funktechnischer Ressourcen, die eine Einrichtung (TLE) zum Ermitteln des aktuellen Verkehrsaufkommens in dem gemeinsamen Signalisierungskanal (RACH) oder des jeweiligen aktuellen Verkehrsaufkommens der Diensteklassen (class1...) aufweist.

18. Funk-Kommunikationssystem nach Anspruch 16 oder 17, **gekennzeichnet durch** eine Auswerteeinrichtung (AW) in der Basisstation (BS) zum Vergleichen des aktuellen Verkehrsaufkommens mit einem Schwellenwert (tlhigh).

19. Funk-Kommunikationssystem nach einem der Ansprüche 15 bis 18, **gekennzeichnet durch** einen Timer (T) in der Basisstation (BS) zum Anregen der Ermittlung des aktuellen Verkehrsaufkommens in dem gemeinsamen Signalisierungskanal (RACH) in bestimmten Zeitintervallen (t).

## Claims

1. Method for signaling control in a radio communications system, with which
- each of several radio stations (MS1...) sends signals for a service in a common signaling channel (RACH) on the uplink to a base station (BS) of the radio communication system, and
- the base station (BS) sends signals in another signaling channel (BCCH, AGCH) on the downlink to the radio stations (MS1...),
- service classes (class1...) are assigned to the services,
**characterized in that**,
- depending on a traffic volume in the common signaling channel (RACH), as currently determined, the base station (BS) selects possible service classes (class1...) for processing,
- the base station (BS) signals the selected possible service classes (class1...) to the radio stations (MS1...) in the additional signaling channel (BCCH, AGCH), and
- only those radio stations (MS1...) for which the services can be assigned to a possible service class (class1...) access the common signaling channel (RACH).

2. Method in accordance with claim 1, **characterized in that** one service class (classl) is assigned to a service relating to connection management.

3. Method in accordance with a preceding claim, **characterized in that** one service class (class2) is assigned to a service relating to mobility management.

4. Method in accordance with a preceding claim, **characterized in that** one service class (class3) is assigned to a service relating to packet transmission.

5. Method in accordance with a preceding claim, **characterized in that** the each of the selected service classes (class1...) is identified by a data element (flag1...) in a signaling message (sig) in the additional signaling channel (BCCH, AGCH).

6. Method in accordance with a preceding claim, **characterized in that** the current traffic volume in the common signaling channel (RACH) is determined in the base station (BS) or in a device (RNM) for assigning radio resources for the radio communication system.

7. Method in accordance with a preceding claim, **characterized in that** the current traffic volume in the common signaling channel (RACH) is determined periodically, at prescribed time intervals (t) and/or when there is a change in the traffic volume.

8. Method in accordance with a preceding claim, **characterized in that** the current traffic volume for each of the service classes (class1...) is compared against a threshold value (tlhigh) for the maximum traffic volume, so that if the threshold value (tlhigh) is exceeded the service class (class1...) concerned is selected for not processing.

9. Method in accordance with a preceding claim, **characterized in that** the current traffic volume in the common signaling channel (RACH) is compared against at least one threshold value (tlhigh) for the maximum traffic volume, so that for each threshold value (tlhigh) if it is exceeded a certain service class (class1...) is selected for not processing.

10. Method in accordance with a preceding claim, **characterized in that** an access signaling channel is used as the common signaling channel (RACH), and is accessed by the radio stations (MS1...) in accordance with a randomized slotted-ALOHA procedure.

11. Method in accordance with a preceding claim, **characterized in that** a general signaling channel is used as the additional signaling channel (BCCH, AGCH), in which is transmitted general system data for the radio communication system, or a confirmation signaling channel specific to the link is used.

12. Method in accordance with a preceding claim, **characterized in that** subscriber separation is performed in accordance with a CDMA method for signal transmission over a radio interface of the radio communication system, with which a physical transmission channel for the signaling channel (RACH) and for the additional signaling channel (BCCH, AGCH) is defined by a frequency band (B) and a spread code (c).

13. Method in accordance with a preceding claim, **characterized in that** subscriber separation is performed in accordance with a TDMA method, with which a physical transmission channel for the signaling channel (RACH) and for the additional signaling channel (BCCH, AGCH) is defined by a frequency band (B) and a time slot (ts).

14. Method in accordance with a preceding claim, **characterized in that** the signal transmission is performed in accordance with a TDD method, with which the signals on the uplink from the radio stations (MS1...) to the base station (BS) and on the downlink from the base station (BS) to the radio stations (MS1....) are transmitted at different times in a frequency band (B).

15. Radio communication system for carrying out the method, in accordance with one of the claims 1 to 14, with several radio stations (MS1...), each of which has transmit/receive equipment (SEE) for transmitting the signals for each service in a common signaling channel (BACH) on the uplink to a base station (BS), and the base station (BS) has transmit/receive equipment (SEE) for transmitting signals in an additional signaling channel (BCCH, AGCH) on the downlink to the radio stations (MS1...), **characterized by**
- a control device (ST) in the base station (BS) to select from the possible service classes (class1...), which have been assigned to the services, some for further processing, the selection depending on the traffic volume in the common signaling channel (RACH) as currently determined, and to supply this selection for the transmit/receive equipment (SEE) to signal the selected possible service classes (class1...) in the additional signaling channel (BCCH, AGCH), and
- a control device (ST) provided in each of the radio stations (MS1...), which is capable of being controlled in such a way that only those radio stations (MS1...) whose services can be assigned to a possible service class access the common signaling channel (BACH).

16. Radio communication system in accordance with claim 15, **characterized by** a device (TLE) in the base station (BS) for determining either the current traffic volume in the common signaling channel (RACH) or the current traffic volume for each of the services classes (class1...).

17. Radio communication system in accordance with claim 15, **characterized by** a device (RNM), connected to the base station (BS), for assigning radio resources, which has a device (TLE) for determining either the current traffic volume in the common signaling channel (BACH) or the current traffic volume for each of the services classes (class1...).

18. Radio communication system in accordance with claim 16 or 17, **characterized by** an analysis device (AW) in the base station (BS) for comparing the current traffic volume against a threshold value (tlhigh).

19. Radio communication system in accordance with one of the claims 15 to 18, **characterized by** a timer (T) in the base station (BS) to prompt the determination of the current traffic volume in the common signaling channel (BACH) at certain intervals of time (t).

## Revendications

1. Méthode pour contrôler la signalisation dans un système de radiocommunication, selon lequel
- des signaux d'un service sont toujours émis dans un canal de signalisation commun (RACH) dans le sens ascendant depuis plusieurs stations radio (MS1...) jusqu'à une station de base (BS) du système de radiocommunication, et
- des signaux sont émis dans un autre canal de signalisation (BCCH, AGCH) dans le sens descendant depuis la station de base (BS) jusqu'aux stations radio (MS1...),
- selon lequel des classes de services (class1...) sont attribuées aux services,
**caractérisée en ce que**
- des classes de services (class1...) possibles sont sélectionnées par la station de base (BS) pour traiter les données, en fonction d'un volume de trafic calculé pour un instant donné dans un canal de signalisation commun (RACH),
- les classes de services (class1...) possibles sélectionnées par la station de base (BS) sont signalées aux stations radio (MS1...) dans l'autre canal de signalisation (BCCH, AGCH), et
- seules les stations radio (class1...) dont les services peuvent être attribués à une classe de services possible (class1...), ont accès au canal de signalisation commun (RACH).

2. Méthode selon la revendication 1, **caractérisée en ce qu'**une classe de services (class1) est attribuée à un service concernant une commande d'appel.

3. Méthode selon l'une des revendications précédentes, **caractérisée en ce qu'**une classe de services (class2) est attribuée à un service concernant une commande de mobilité.

4. Méthode selon l'une des revendications précédentes, **caractérisée en ce qu'**une classe de services (class3) est attribuée à un service concernant une transmission de données par paquets.

5. Méthode selon l'une des revendications précédentes, **caractérisée en ce que** les classes de services sélectionnées (class1...) sont toujours identifiées par un élément d'information (flag1...) dans un message de signalisation (sig.) dans l'autre canal de signalisation (BCCH, AGCH).

6. Méthode selon l'une des revendications précédentes, **caractérisée en ce que** le volume de trafic de l'instant dans le canal de signalisation commun (RACH) est calculé dans la station de base (BS) ou dans un dispositif (RNM) servant à attribuer des ressources radiotechniques du système de radiocommunication.

7. Méthode selon l'une des revendications précédentes, **caractérisée en ce que** le volume de trafic de l'instant dans le canal de signalisation commun (RACH) est calculé périodiquement à intervalles prédéterminés (t) et/ou lorsque le volume du trafic change.

8. Méthode selon l'une des revendications précédentes, **caractérisée en ce que** le volume de trafic de l'instant de chacune des classes de services (class1...) est comparé à une valeur de seuil (tlhigh) pour un volume de trafic maximum, selon laquelle, lorsque la valeur de seuil (tlhigh) est dépassée, la classe de services correspondante (class1...) n'est pas sélectionnée pour la suite du traitement des données.

9. Méthode selon l'une des revendications 1 à 7, **caractérisée en ce que** le volume de trafic de l'instant dans le canal de signalisation commun (RACH) est comparé à au moins une valeur de seuil (tlhigh) pour un volume de trafic maximum, selon laquelle, lorsque la valeur de seuil (tlhigh) est dépassée, une classe de services (class1....) n'est pas sélectionnée pour la suite du traitement des données.

10. Méthode selon l'une des revendications précédentes, **caractérisée en ce que** l'on utilise un canal de signalisation d'accès comme canal de signalisation (RACH) commun, auquel on accède par les stations radio (MS1...) selon un système aléatoire ALOHA crénelé.

11. Méthode selon l'une des revendications précédentes, **caractérisée en ce que** l'on utilise comme autre canal de signalisation (BCCH, AGCH) un canal de signalisation universel dans lequel des informations générales relatives au système de radiocommunication sont envoyées, ou un canal de signalisation de confirmation individuel pour chaque communication.

12. Méthode selon l'une des revendications précédentes, **caractérisée en ce que** les abonnés sont séparés selon un procédé CDMA (AMRC = Accès Multiple par Répartition en Code) pour permettre de transmettre des signaux par une interface radio du système de radiocommunication, un canal physique de transmission pour le canal de signalisation commun (RACH) et pour l'autre canal de signalisation (BCCH, AGCH) étant défini par une bande de fréquences (B) et un code d'étalement du spectre (c).

13. Méthode selon l'une des revendications précédentes, **caractérisée en ce que** les abonnés sont séparés selon un procédé TDMA (AMRT = Accès Multiple par Répartition dans le Temps), un canal physique de transmission pour le canal commun de signalisation (RACH) et pour l'autre canal de signalisation (BCCH, AGCH) étant défini par une bande de

14. Méthode selon l'une des revendications précédentes, **caractérisée en ce que** la transmission des signaux est effectuée conformément à un procédé TDD, les signaux étant transmis à des moments différents sur une bande de fréquences (B) dans le sens ascendant depuis les stations radio (MS1...) vers la station de base (BS) et dans le sens descendant depuis la station de base (BS) vers les stations radio (MS1...).

15. Système de radiocommunication pour appliquer la méthode selon l'une des revendications 1 à 14, avec plusieurs stations radio (MS1...) qui ont toutes un dispositif d'émission et de réception (SEE) pour émettre des signaux respectifs d'un service dans un canal de signalisation commun (RACH) dans le sens ascendant vers une station de base (BS), la station de base (BS) possédant un dispositif d'émission et de réception (SEE) pour envoyer des signaux dans un autre canal de signalisation (BCCH, AGCH) dans le sens descendant vers les stations radio (MS1...), **caractérisé par**
- un dispositif de commande (ST) dans la station de base (BS) pour sélectionner les classes de services (class1...) possibles attribuées aux services pour continuer à traiter les données en fonction du volume de trafic obtenu à un moment précis dans le canal de signalisation commun (RACH), et pour préparer la sélection pour le dispositif d'émission et de réception (SEE) servant à signaler les classes de services (class1...) possibles sélectionnées dans l'autre canal de signalisation (BCCH, AGCH), et
- un dispositif de commande (ST) toujours prévu dans les stations radio (MS1...), qui peut être commandé de façon à ce que seules les stations radio (MS1...) dont les services peuvent être attribués à une classe de services possible, accèdent au canal de signalisation commun (RACH).

16. Système de radiocommunication selon la revendication 15, **caractérisé par** un dispositif (TLE) dans la station de base (BS) servant à calculer le volume de trafic de l'instant dans le canal de signalisation commun (RACH) ou le volume de trafic d'un instant considéré des classes de services (class1...).

17. Système de radiocommunication selon la revendication 15, **caractérisé par** un dispositif (RNM) relié à la station de base (BS) servant à attribuer des ressources radiotechniques, qui possède un dispositif (TLE) pour calculer le volume de trafic de l'instant dans le canal de signalisation (RACH) commun ou le volume de trafic des différentes classes de services (class1...) à chaque instant considéré.

18. Système de radiocommunication selon la revendication 16 ou 17, **caractérisé par** un dispositif d'évaluation (AW) dans la station de base (BS) pour comparer le volume du trafic de l'instant avec une valeur de seuil (tlhigh).

19. Système de radiocommunication selon l'une des revendications 15 à 18, **caractérisé par** une horloge (T) dans la station de base (BS) servant à déclencher le calcul du volume de trafic de l'instant dans le canal de signalisation commun (RACH) à des intervalles de temps déterminés (t).
